# EUROPEAN PATENT APPLICATION

(11) **EP 3 739 306 A1**
(43) Date of publication of application: **18.11.2020**
(21) Application number: 19075009.1
(22) Date of filing: 04.07.2019
(51) Int. Cl.: G01G 19/08, G01G 19/60, G01G 23/01, G01G 3/14

(54) **WEIGHING SYSTEM FOR USE ON MOVING VEHICLES**

(30) Priority: 17.08.2018 NL 1042956
(71) Applicant: PENKO Engineering B.V., 6711 BD Ede (NL)
(72) Inventor: The designation of the inventor has not yet been filed

(57) **Abstract**

The invention concerns a weighing system that can be used for non-automatic and automatic weighing, dosing and packaging of batches, for example of fish on a fishing boat at sea. By accurately determining the mass of the batch, only a small extra weight is sufficient to ensure that the package contains the guaranteed quantity of fish.

The weighing system simultaneously determines in a short time the forces exerted by a fixed mass and the load in the direction perpendicular to the weighing equipment. The software calculates the mass of the batch with these measurement data. The weighing equipment is constructed in such a way that the dynamic properties of the two built-in load cells are the same, so that differences here have no effect on the registered mass.

The measuring system automatically adjusts the bandwidth of the filter (the time during which a series of simultaneous force measurements are carried out and the results are averaged) to the unrest of the moving vehicle, for example the movements of the fishing boat.

In order to eliminate the inaccuracy and inertia of the measurements when changing the batch and during dosing of the batch, if dynamic forces arise (such as during replenishment by dosing a fish on the batch), the software includes a built-in restart procedure, whereby the results of irrelevant force measurements are eliminated for the mass calculation of the batch. As a result, after weight changes without delay, due to the filter time, the new measured value is immediately displayed. Thanks to this speed, the system is not only suitable for manual dosing but also for automatic weighing/dosing processes.

## Description

In the first part of this patent application, without limiting the scope of the patent application, the operation of modern weighing equipment is described for the application of the weighing system according to the invention to fishing boats.

On fishing boats, catches are more frequently weighed (and packed). By weighing accurately, little overweight is needed to ensure that the package always contains the guaranteed mass of fish.

A weighing instrument determines the mass by means of the gravity. Modern weighing instruments are equipped with load cells that accurately and fast fully automatically determine the force that the object to be weighed, now called batch, exerts on the weighing equipment. On the fishing boat the weighing equipment is attached to the boat and moves with all movements of the fishing boat. The force exercised by the load on the weighing equipment is therefore dependent on the inclination of the ship (in two directions) and accelerations and deceleration (in two directions) of the weighing device. The extent of these fishing boat movements is called the unrest.

By a single force measurement, the acceleration of gravity must be known to determine the mass. Fishing boats travel over sea, where this acceleration of gravity depends on the latitude. In addition, the swell, caused by the waves, of the ship continuously causes an apparent decrease or increase in gravity.

In order to determine the mass of the charge, despite the unrest of the fishing boat and despite the apparent influence of the acceleration of gravity, two measurements are carried out simultaneously with modern weighing equipment. An object, of which the mass is precisely known, is built into the weighing equipment. Simultaneously, the forces that this fixed mass and the load exert perpendicular to the weighing equipment are measured. The computer compares the measured forces and calculates the mass of the charge on this basis, which is hereinafter referred to as the measurement result.

A first source for deviation from the magnitude of the measured force of reality is inherent to the measuring principle. The load cell measures in its top axis, perpendicular to the load cell. The swell, however, causes a constantly changing skew around two axes, the longitudinal axis and the transverse axis. In addition to the, in principle incorrect, resultant perpendicular to the sensor, the load cell thus detects transverse forces and torsion. The externally occurring transverse force and torsion and also the own frequency of the load cell are translated in the load cell into forces perpendicular to the surface of the weighing equipment. The greater the transverse force and torsion (exercised on the load cell) due to the unrest of the fishing boat, the greater the error in the measurement. The externally exercised transverse force and torsion and also the own frequency of the load cell are translated in the load cell into forces perpendicular to the surface of the weighing equipment. The greater the transverse force and torsion (exercised on the load cell) due to the unrest of the fishing boat, the greater the error in the measurement. A second source of deviation from the magnitude of the measured force of reality is caused by the swell of the ship, the accelerations and decelerations in the top axis of the weighing system due to the movement up and down resulting in an apparent increase or decrease in the gravity. A third source for deviations due to the weighing equipment is the fact that the fixed mass is not exactly in the same place as the batch. The dynamic movements of the charge and the fixed mass are therefore not fully identical. A fourth source for deviations due to the weighing equipment comes from vibrations of the ship, caused among other things by the ship's engine and propeller, hoisting equipment and winches, for example to bring in the nets. These vibrations are perceptible as direct unrest on the weighing result.

These four sources of errors cause the accuracy of the force measurement by means of load cells to decrease when the unrest of the fishing boat increases. The influence of the four sources mentioned together is generally of such a size that it is not possible to determine the mass of the batch with a single measurement on a moving fishing boat within the desired accuracy.

In order to obtain in spite of that an accurate determination of the mass of the charge, a large number of measurements are taken one after another after which the average thereof is determined. The greater the unrest of the fishing boat, the more measurements are needed to enable the determination of the average mass with a sufficient accuracy. Modern measuring equipment performs many force measurements in a short time (up to 1600 pieces per second). The number of measurements used to determine the average is called the bandwidth of the filter. With a low unrest of the fishing boat, the filter can be less than ten milliseconds wide, with a very large unrest, the bandwidth of the filter can even go up to a second. A large bandwidth of the filter is undesirable because it hinders the speed of dosing.

For many weighing systems, a method is chosen whereby the crew of the fishing boat itself sets the bandwidth of the filter. The responsible person assesses the degree of unrest of the fishing boat and adjusts the bandwidth (expressed in milliseconds) of the filter accordingly. In practice, this unrest can vary noticeable in a very short time. That's why in practice it often is impossible to adjust the filter adequately manually. On one hand, a too wide filter often hinders the desired dosing speed because it takes too much time before the measured value of the batch is displayed stably. On the other hand, a too narrow filter produces, because of the unrest, a less accurate weighing result, what must be compensated by giving overweight to the batch (in order to guarantee a minimum mass), what costs money. The weighing system according to the invention aims to be free from the aforementioned consequences of manually selecting the bandwidth of the filter.

The second part of this patent application concerns the software used in the weighing system according to the invention.

The weighing system of the invention aims to adjust the bandwidth of the filter automatically to the unrest of the fishing boat. The number of measurements used to determine the average is continuously and automatically adjusted by the weighing system according to the invention to the degree of unrest of the fishing boat.

After every two, simultaneously done, measurements of the forces (exerted by the fixed mass and the load on the weighing equipment), the software determines the ratio between the measured forces and calculates with that ratio the mass of the batch: this result is referred to as the measurement.

The software stores the selected bandwidth of the filter of the previous batch (T 1 seconds). The equipment then performs a series of measurements during T 1 seconds. The software detects the peak values, the highest and lowest values of these measurements (which are higher and lower when the unrest of the fishing boat increases). The software now selects, depending on the magnitude of the difference between the two peak values, the required bandwidth of the filter (T 2 seconds). The software determines the average value of the measurements made during T 2 seconds. This average value is displayed as the weighing result of the mass of the batch. After every measurement the software repeats this procedure, so that there is a constantly advancing average. In summary: characteristic for the measuring system according to the invention is that the software determines the width of the filter fully automatically, depending on the current unrest of the fishing boat.

When changing the batch, the software of the weighing system according to the invention follows a special procedure. As soon as the batch on the weighing equipment has reached the desired mass when dosing the fish, this batch is removed from the weighing equipment and a new batch is added. Because suddenly a large change takes place of the force exerted by the load on the weighing equipment (but not the force exerted by the fixed mass), the software recognizes the change. Then the software is restarted and the results of the previous force measurements are erased out of the memory. This way the force measurements of the previous charge do not contaminate the calculated average of the new one. Moreover there is no need for a safe waiting time after having changed the batch. In summary: The weighing system according to the invention uses the force measurements of the current batch exclusively without any loss of time.

During dosing, the batch is incrementally increased until it has reached the pre-set value. The software of the weighing system according to the invention follows a special procedure. The dosed fish has a certain mass and speed when it arrives at the weighing equipment. The dynamic force causing this is registered by the load cell of the charge. Because this change in force noticeably deviates from the detected unrest, the software recognizes the dosing action. The software then restarts the procedure. The results of previous force measurements are erased out of the memory. In summary: The software of the weighing system according to the invention prevents the inertia caused by the filter from adversely affecting the speed at which the increase in the mass of the batch is represented. Thanks to this speed, the system is suitable for automatic weighing/dosing processes as well.

The third part of this patent application deals with the special structure of the weighing equipment (which is part of the total weighing system according to the invention). It concerns the hardware of the weighing system.

Usually a relatively small fixed mass, mount on a load cell, is built in the weighing equipment for fishing boats. For the charge, which usually has a much larger mass than that fixed mass, a different type of load cell, matching with that larger mass, is installed. The inventors have discovered the deviation in behavior of the two types of load cells as a relevant source of inaccuracy when comparing the force measurements of the equipment itself. Differences in the construction of load cells cause differences in the sensitivity of the load cells for dynamic effects such as acceleration and deceleration, transverse force and torsion. Therefore, by using a different type of force sensor for the fixed mass and the charge, measurement signals with other behaviors are compared, making a perfect compensation of the dynamic influences on the weighing equipment impossible.

In the measuring system according to the invention, load cells of the same type are used for both measurements, with substantially the same sensitivity to transverse force, torsion and a similar own frequency. This new approach requires a relatively high fixed mass, makes weighing equipment more expensive and greatly restricts the freedom in the choice of load cells. The chosen solution initially seemed technically unfeasible, due to the limited availability of those load cells in the market. A search for a couple of load cells suitable for this application finally was completed successfully.

## Claims

1. Weighing system, for use as automatic weighing and dosing on a moving vehicle (such as a fishing boat at sea), what simultaneously measures the two forces (exerted perpendicular to the measuring equipment) of a fixed mass and the load, whereby the mass of the charge is calculated with the aid of the simultaneously measured forces in a very short time and the average masses are calculated during a certain time (called the bandwidth of the filter) whereby the mass of the charge is obtained, **characterized by** the automatically adjusted bandwidth of the filter by the unrest (vibrations, movements, accelerations and delays in all directions, for example the movements of the fishing boat at sea) of the vehicle.

2. Weighing system according to conclusion 1, with the characteristic that during automatic weighing, when starting the weighing of the next batch, the magnitude of previous force measurements is erased out of the memory and the procedure for determining the bandwidth of the filter and determining the average is restarted, so that this change of charge cannot be a source of inaccuracy and no time delay is required to prevent for this source of inaccuracy.

3. Weighing system according to conclusion 1 and or 2, with the characteristic that, when performing the dosing of the batch (when dynamic forces are recorded, for example by dosed fish), the magnitude of previous force measurements is erased out of the memory and the procedure for determining the bandwidth of the filter and the determination of the average mass of the batch is restarted, so that the dynamic forces during dosing cannot be a source of inaccuracy and the weight increase of the batch is nevertheless directly displayed.

4. Weighing system according to conclusion 1, 2 and or 3, with the characteristic that the load cells, which are used to determine the forces exerted by the fixed mass and the charge on the weighing equipment simultaneously, are of the same type and with substantially the same sensitivity to dynamic behavior, transverse force and torsion and with a similar own frequency, whereby the inaccuracy of the force measurement (in the direction perpendicular to the weighing equipment) caused by the hardware of the measuring system is reduced to a minimum because both measured values are mutually comparable, what makes a good compensation possible.
